# EUROPEAN PATENT APPLICATION

(11) **EP 3 173 745 A1**
(43) Date of publication of application: **31.05.2017**
(21) Application number: 16198053.7
(22) Date of filing: 09.11.2016
(51) Int. Cl.: G01C 23/00

(54) **METHODS AND APPARATUS FOR PROVIDING VISUAL OVERLAY ASSISTANCE FOR FLIGHT PREPARATION**

(30) Priority: 30.11.2015 US 201514953922
(71) Applicant: Honeywell International Inc., Morris Plains, NJ 07950 (US)
(72) Inventor: N, Mahesh Babu, Morris Plains, NJ 07950 (US); BAZAWADA, Suresh, Morris Plains, NJ 07950 (US); MOHIDEEN, Mohammed Ibrahim, Morris Plains, NJ 07950 (US); REDDY, Mahipal, Morris Plains, NJ 07950 (US)
(74) Representative: Houghton, Mark Phillip

(57) **Abstract**

A method for providing visual overlay assistance to a flight crew onboard an aircraft is provided. The method presents, via visual overlay device display, required settings for a plurality of flight deck instruments located in a flight deck onboard an aircraft, wherein the required settings are presented as graphical elements superimposed over each of the plurality of flight deck instruments.

## Description

### TECHNICAL FIELD

Embodiments of the subject matter described herein relate generally to providing computerized assistance for pre-flight and/or flight inspections. More particularly, embodiments of the subject matter relate to providing visual overlay information associated with flight deck instrumentation settings.

### BACKGROUND

A flight checklist or cockpit checklist is used as a memory guide for pilots to configure the complex systems in an aircraft to ensure safe flight. The first form of a flight checklist was a paper format. Paper checklists are a very simple device; they consist of a list of items written on a paper card. In most cases, the card is held in the pilot's hand, or clipped to the yoke or glued to the instrument panel. A scroll checklist consists of a narrow strip of paper that scrolls vertically between two reels. A mechanical checklist consists of a small panel that contains several plastic slides moving over a list of checklist items. As an item is accomplished, the slide is moved to cover the item's nomenclature. The development of electronic flight checklists provided a system that uses standardized normal and non-normal checklists for performing pre-flight and flight inspections and inspections associated with a warning condition.

An electronic flight checklist may be used to prepare an aircraft for flight, or to ensure that certain conditions are met in order for the aircraft to operate safely during a particular phase of flight (e.g., Preflight, Taxi, Takeoff, Climb, Cruise, Descent, Approach and Landing and Shutdown). To prepare an aircraft for a particular phase of flight, a flight crew may follow one or more standard operating procedures. Often, these procedures are documented in the form of pre-flight and/or flight checklists of action items to be completed. Electronic flight checklists may include a safety exterior inspection, a flight deck inspection, or the like. Exterior inspections may involve flight crew members walking around the aircraft and verifying that certain criteria associated with the outside of the aircraft are met. A flight deck inspection may include visual scans of one or more overhead panels, glare-shields, flight deck instruments, and/or pedestals. While performing the overhead, glare-shield, and/or flight deck instrument scanning, the flight crew has to ensure that a large number of switches are configured appropriately. Catastrophic conditions may result if all of the switches are not in the required positions.

Accordingly, it is desirable to ensure that the flight inspections (e.g., actions associated with flight checklists) are completed without mistake. Furthermore, other desirable features and characteristics will become apparent from the subsequent detailed description and the appended claims, taken in conjunction with the accompanying drawings and the foregoing technical field and background.

### BRIEF SUMMARY

Some embodiments of the present disclosure provide a method for providing visual overlay assistance to a flight crew onboard an aircraft. The method presents, via visual overlay device display, required settings for a plurality of flight deck instruments located in a flight deck onboard an aircraft, wherein the required settings are presented as graphical elements superimposed over each of the plurality of flight deck instruments.

Some embodiments provide a system for providing visual overlay assistance to a flight crew onboard an aircraft. The system includes: system memory, configured to store one or more databases comprising required settings associated with a plurality of flight deck instruments; at least one processor, communicatively coupled to the system memory and a near-to-eye (NTE) display, the at least one processor configured to: identify the required settings for the plurality of flight deck instruments; and transmit the required settings to the NTE display; and the NTE display, configured to present the required settings as graphical elements superimposed over the plurality of flight deck instruments in a visual field.

A non-transitory, computer-readable medium containing instructions thereon, which, when executed by a processor, perform a method comprising: capturing an image of a flight deck onboard an aircraft, wherein the image depicts cockpit elements including switches and instrumentation; identifying a plurality of switch positions and readout values associated with the cockpit elements, based on the captured image; determining that one of the cockpit elements requires adjustment, based on the plurality of switch positions and readout values; and presenting, via near-to-eye (NTE) display, a notification superimposed over the one of the cockpit elements that requires adjustment.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a schematic block diagram representation of a flight deck assistance system, in accordance with the disclosed embodiments;
FIG. 2A is a diagram representation of a flight deck, including an exemplary embodiment of a particular instrument viewed using a flight deck assistance system;
FIG. 2B is a magnified view of an exemplary embodiment of a particular instrument viewed using a flight deck assistance system;
FIG. 3 is a diagram representation of flight deck instrument panel viewed using a flight deck assistance system;
FIG. 4 is a flow chart that illustrates an embodiment of a process for providing visual overlay assistance to a flight crew onboard an aircraft;
FIG. 5 is a flow chart that illustrates an embodiment of a process for determining that flight deck instruments require adjustments; and
FIG. 6 is a flow chart that illustrates an embodiment of a process for altering an visual overlay display based on user input adjustments.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

The subject matter presented herein relates to methods and apparatus for presenting graphical elements superimposed over flight deck instruments, via a visual overlay display. The graphical elements are designed to bring the attention of a flight crew member to a particular flight deck instrument, and to indicate required settings for that flight deck instrument. In certain embodiments, the flight deck instruments for which the visual overlay features are displayed are associated with a user-selected, electronic flight checklist, and in some embodiments, graphical elements are displayed for flight deck instruments requiring adjustment.

Certain terminologies are used with regard to the various embodiments of the present disclosure. A flight deck refers to the cockpit of an aircraft, from which one or more flight crew members control the aircraft. The flight deck contains flight deck instruments on at least one instrument panel, which may include switches, gauges, displays, and various controls that enable the flight crew to operate the aircraft. For purposes of the present disclosure, a visual overlay is presented as a live direct view of a physical, real-world environment (e.g., the inside of a flight deck of the aircraft) whose elements are supplemented by computer-generated graphical elements, which provide additional data for the user. In this case, graphical elements are superimposed over associated flight deck instruments, in order to call the attention of a user to settings data applicable to a particular flight deck instrument. A visual overlay display may include a near-to-eye (NTE) display, such as a wearable display device (e.g., goggles, glasses, etc.) or a handheld NTE display, such as a smartphone.

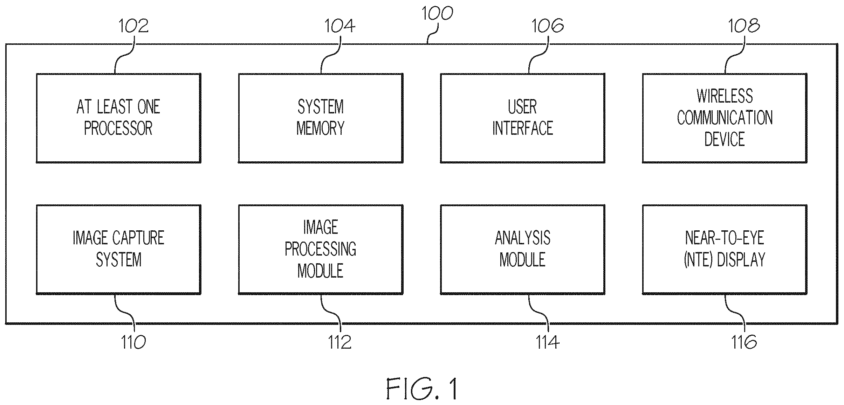

Turning now to the figures, FIG. 1 is a schematic block diagram representation of a flight deck assistance system 100, in accordance with the disclosed embodiments. The flight deck assistance system 100 may include, without limitation: at least one processor 102; system memory 104; a user interface 106; a wireless communication device 108; an image capture system 110; an image processing module 112; an analysis module 114; and a near-to-eye (NTE) display 116. These elements and features of flight deck assistance system 100 may be operatively associated with one another, coupled to one another, or otherwise configured to cooperate with one another as needed to support the desired functionality - in particular, providing visual overlay assistance to a flight crew completing an electronic checklist onboard an aircraft, as described herein. For ease of illustration and clarity, the various physical, electrical, and logical couplings and interconnections for these elements and features are not depicted in FIG. 1. Moreover, it should be appreciated that embodiments of the flight deck assistance system 100 will include other elements, modules, and features that cooperate to support the desired functionality. For simplicity, FIG. 1 only depicts certain elements that relate to the electronic checklist assistance techniques described in more detail below.

The at least one processor 102 may be implemented or performed with one or more general purpose processors, a content addressable memory, a digital signal processor, an application specific integrated circuit, a field programmable gate array, any suitable programmable logic device, discrete gate or transistor logic, discrete hardware components, or any combination designed to perform the functions described here. In particular, the at least one processor 102 may be realized as one or more microprocessors, controllers, microcontrollers, or state machines. Moreover, the at least one processor 102 may be implemented as a combination of computing devices, e.g., a combination of digital signal processors and microprocessors, a plurality of microprocessors, one or more microprocessors in conjunction with a digital signal processor core, or any other such configuration.

The system memory 104 may be realized using any number of devices, components, or modules, as appropriate to the embodiment. Moreover, the at least one processor 102 could include system memory 104 integrated therein and/or system memory 104 operatively coupled thereto, as appropriate to the particular embodiment. In practice, the system memory 104 could be realized as RAM memory, flash memory, EPROM memory, EEPROM memory, registers, a hard disk, a removable disk, or any other form of storage medium known in the art. In certain embodiments, the system memory 104 includes a hard disk, which may also be used to support functions of the flight deck assistance system 100. The system memory 104 can be coupled to the at least one processor 102 such that the at least one processor 102 can read information from, and write information to, the system memory 104. In the alternative, the system memory 104 may be integral to the at least one processor 102. As an example, the at least one processor 102 and the system memory 104 may reside in a suitably designed application-specific integrated circuit (ASIC).

The system memory 104 is configured to store one or more databases that include electronic flight checklist data comprising required settings, switch positions, readout values, and other configuration parameters for the instrumentation in the flight deck of an aircraft. Each flight checklist includes a set of action items for a flight crew member to complete prior to and/or during flight, to ensure the safe operation of systems onboard the aircraft during flight. Flight checklists stored in system memory 104 may include aviation checklists that are standard in the industry and/or custom checklists that have been configured by a user.

In certain embodiments, a flight checklist may be associated with one of two types: Normal Flight Checklists or Non-Normal Flight Checklists. Normal Flight Checklists are associated with Phase of Flight (e.g., Preflight, Taxi, Takeoff, Climb, Cruise, Descent, Approach and Landing and Shutdown). Before each phase of flight, the flight crew is required to configure the aircraft for safe flight operations, and uses a predetermined Normal Flight Checklist to assist in this configuration. Non-Normal Flight Checklists are driven by Warning or Advisory Messages (e.g., Engine Indicating and Crew Alerting System (EICAS) messages), which are generated in response to a problem or issue associated with equipment and/or systems onboard the aircraft. Non-Normal Flight Checklists provide instructions to fix the aircraft and/or to take the aircraft safely from the warning scenario.

The user interface 106 may include or cooperate with various features to allow a user to interact with the flight deck assistance system 100. Accordingly, the user interface 106 may include various human-to-machine interfaces, e.g., a keypad, keys, a keyboard, buttons, switches, knobs, a touchpad, a joystick, a pointing device, a virtual writing tablet, a touch screen, a microphone, or any device, component, or function that enables the user to select options, input information, or otherwise control the operation of the flight deck assistance system 100. For example, the user interface 106 could be manipulated by an operator to select and complete electronic flight checklists applicable to pre-flight and flight safety procedures, as described herein.

The wireless communication device 108 is suitably configured to provide a local wireless network for the transmission of signals between one or more devices within a wireless transmission range of the flight deck assistance system 100. For example, the wireless communication device 108 generates a local wireless communication network that is used to communicate data between the flight deck assistance system 100 and any connected peripheral wireless devices. For example, one or more wireless cameras associated with the image capture system 110 or a wireless near-to-eye (NTE) display 116 may communicate with other elements of the flight deck assistance system 100 via wireless network generated by the wireless communication device 108. In some embodiments, the wireless communication device 108 generates a WLAN network that is compatible with an IEEE 802.11 standard, and in other embodiments, the wireless communication device 108 may generate an ad-hoc network, a Bluetooth network, a personal area network (PAN), or the like.

The image capture system 110 includes one or more cameras located in the flight deck of the aircraft for purposes of obtaining images of flight deck instrumentation. Each camera associated with the image capture system 110 may have the ability to capture still frames and/or video images of the interior of the flight deck. Cameras may be positioned in any direction in the flight deck, in order to capture images that include any of the flight deck instrumentation. The image capture system 110 may be configured to obtain images at timed intervals, or in response to user actions (e.g., user-selection of an electronic checklist, user-selection of a particular flight deck instrument, etc.). The image capture system 110 communicates with the various elements of the flight deck assistance system 100 via wired or wireless connection, and is configured to transmit the captured images for processing and analysis.

The image processing module 112 is configured to use image processing and object-recognition techniques commonly known in the art, to scan and recognize flight deck instruments in one or more images obtained via the image capture system 110. In certain embodiments, the image processing module 112 uses digital image processing techniques, to include image analysis and segmentation techniques. Image analysis is concerned with making quantitative measurements from an image to produce a description of it. In the simplest form, this task could be reading a switch position or a readout value. Segmentation techniques are used to isolate the desired object from the image so that position or readout value can be extracted. This information is compared with a preloaded database (stored in system memory 104) of expected switch positions and readout values. The flight deck assistance system 100 then sends the feedback of corrected position and readout values of the cockpit elements that need correction to the flight deck assistance system 100. The flight deck assistance system 100 then superimposes overlay text and/or symbol(s) over the cockpit elements for correction.

The analysis module 114 is configured to identify appropriate settings data associated with the flight deck instruments, and to provide the settings data to a near-to-eye (NTE) display 116. In certain embodiments, the analysis module 114 uses data provided by the image processing module 112 to identify a current state of the flight deck instrumentation, to access a required state of the flight deck instrumentation stored in system memory 104, and to determine adjustments necessary in order to comply with pre-flight and/or flight inspection requirements. In certain embodiments, the analysis module 114 may identify a set of flight deck instruments associated with a particular checklist stored in the database, and determine the necessary settings and/or adjustments for the set of flight deck instruments.

The near-to-eye (NTE) display 116 is an optical display device which includes internal circuitry and hardware configured to allow a user to view his surroundings, and to present an overlay of applicable graphical elements over the surroundings. For purposes of the present disclosure, the combination of the view of real-world surroundings and the overlay of graphical elements is referred to as an enhanced visual display. Here, the analysis module 114 communicates with the NTE display 116, via wired or wireless connection, to provide the enhanced visual display for presentation to the user. The NTE display 116 utilizes technology that is well-known to those of ordinary skill in the art, and will not be unnecessarily described here. In exemplary embodiments, the NTE display 116 may be implemented as a pair of glasses, goggles, a head-mounted display (HMD), visor, face shield, or similar optical display device worn in front of the eyes and configured to present an enhanced visual display to the user for viewing while inside the flight deck of the aircraft. In other embodiments, the NTE display 116 may be implemented using a mobile computing display, such as a smartphone, tablet computer, or other handheld personal computing device which may be held in front of the face to provide the enhanced visual display.

In practice, the image processing module 112 and/or the analysis module 114 may be implemented with (or cooperate with) the at least one processor 102 to perform at least some of the functions and operations described in more detail herein. In this regard, the image processing module 112 and/or the analysis module 114 may be realized as suitably written processing logic, application program code, or the like.

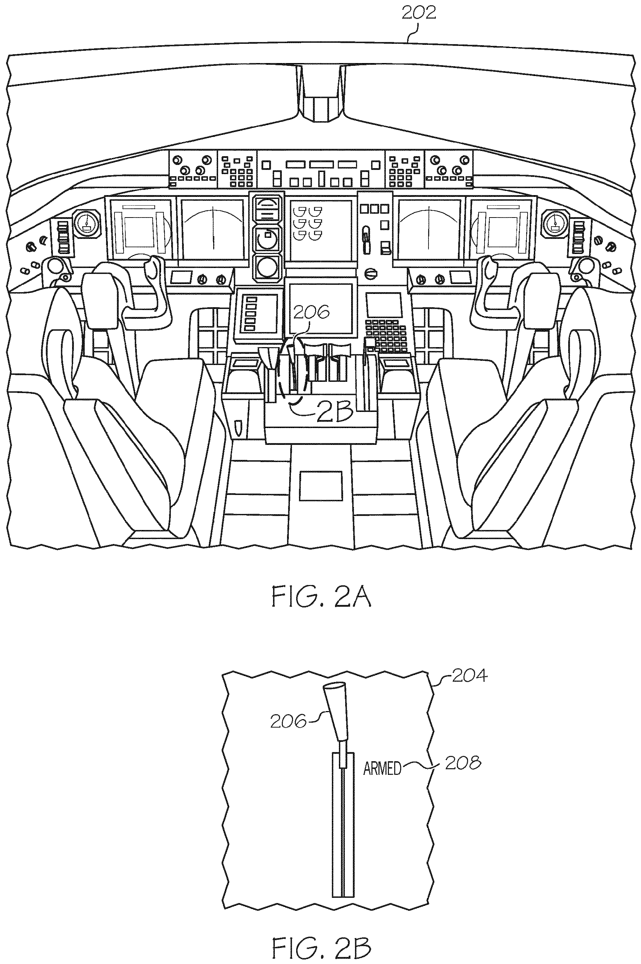

FIG. 2A is a diagram representation of a flight deck 202, including an exemplary embodiment of a particular instrument viewed using a flight deck assistance system. As shown, a flight deck 202 includes flight deck instruments on at least one instrument panel, which may include switches, gauges, displays, and various controls that enable the flight crew to operate the aircraft. One of the flight deck instruments included in this particular example is a speedbrake 206. FIG. 2B illustrates a magnified view 204 of the speedbrake 206 from the flight deck 202, from the perspective of a visual overlay display system. The visual overlay display system has superimposed a graphical element 208 over the area where the speedbrake is located in the flight deck. In this particular embodiment, the graphical element 208 includes text providing instructions for a required setting for the speedbrake 206. However, in some embodiments, the visual overlay display system may present one or more symbols, or a combination of one or more symbols and text, to indicate steps necessary to alter the status of the speedbrake 206 to comply with electronic flight checklist requirements.

In this example, the graphical element 208 indicates that the speedbrake 206 should be in an "ARMED" position. In certain embodiments, the visual overlay display system may present this graphical element 208 to indicate that this is the required setting, regardless of the status of the speedbrake. In other embodiments, however, the visual overlay display system may determine a current status of the speedbrake 206 and present the graphical element 208 when the required setting does not match the current status. Thus, an instruction is provided to the flight crew when intervention is required.

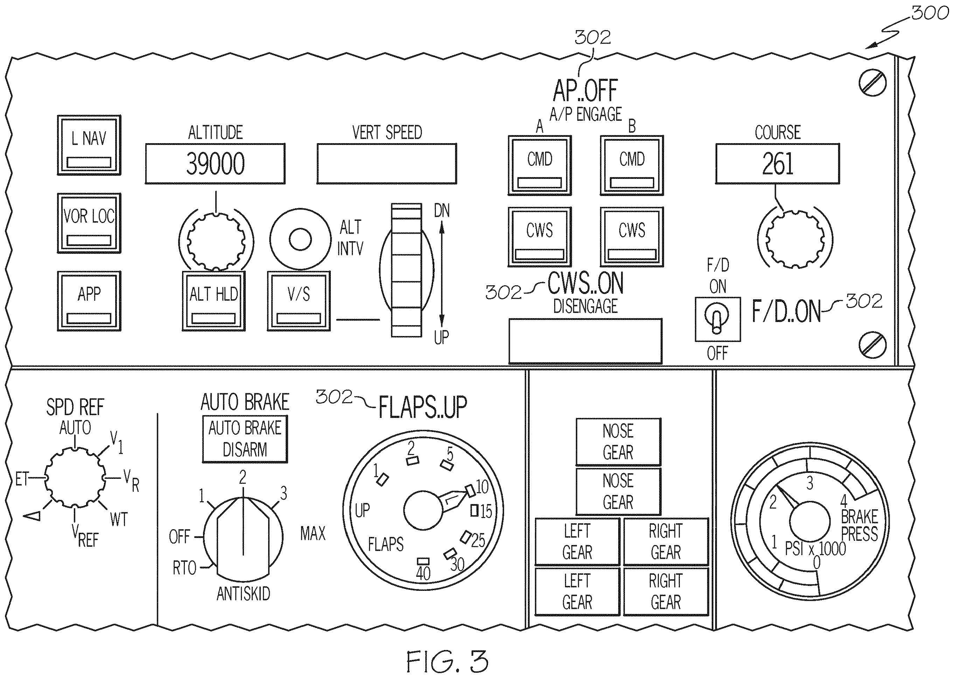

FIG. 3 is a diagram representation of flight deck instrument panel 300 viewed using a flight deck assistance system. It should be noted that the flight deck instrument panel 300 can be implemented as part of the flight deck 202 depicted in FIG. 2A. In this regard, the flight deck instrument panel 300 shows certain elements and components of the flight deck 202 in more detail.

In this particular embodiment, a visual overlay display system presents graphical elements 302, represented by text, superimposed over each flight deck instrument that requires adjustment. The text presented by the graphical elements 302 serves to: (1) call attention of the flight crew to the particular flight deck instrument requiring adjustment; and (2) provide instructions for action items required to change the status of each flight deck instrument. Here, a graphical element 302 is presented over a flight deck instrument which controls autopilot functionality (i.e., "A/P ENGAGE"). This graphical element 302 instructs the flight crew to turn the autopilot instrument off, using the text "AP..OFF". Similar instructions are provided for a flight director instrument ("F/D..ON"), a crew warning system ("CWS..ON"), and a flaps control instrument ("FLAPS..UP"). Each of these graphical elements 302 provides a specific instruction associated with a particular flight deck instrument, and is superimposed over the area of the particular flight deck instrument on the instrument panel.

As shown, graphical elements 302 are provided for a subset of the flight deck instruments requiring adjustments. In other embodiments, graphical elements 302 may be provided for a subset of the flight deck instruments associated with a particular flight inspection checklist, and some embodiments may present required settings regardless of the current status of each flight deck instrument.

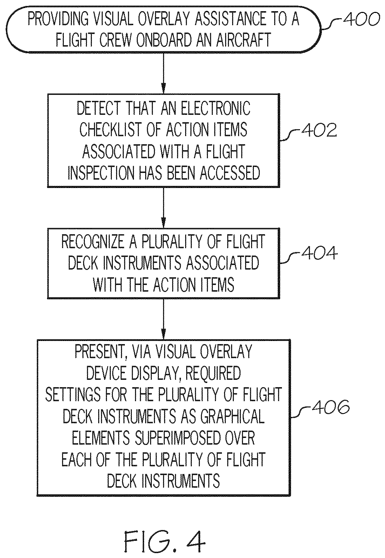

FIG. 4 is a flow chart that illustrates an embodiment of a process for providing visual overlay assistance to a flight crew onboard an aircraft. The various tasks performed in connection with process 400 may be performed by software, hardware, firmware, or any combination thereof. For illustrative purposes, the following description of process 400 may refer to elements mentioned above in connection with FIGS. 1-3. In practice, portions of process 400 may be performed by different elements of the described system. It should be appreciated that process 400 may include any number of additional or alternative tasks, the tasks shown in FIG. 4 need not be performed in the illustrated order, and process 400 may be incorporated into a more comprehensive procedure or process having additional functionality not described in detail herein. Moreover, one or more of the tasks shown in FIG. 4 could be omitted from an embodiment of the process 400 as long as the intended overall functionality remains intact.

First, the process 400 detects that an electronic checklist of action items associated with a flight inspection has been accessed (step 402). Electronic checklists are generally stored in one or more databases of an onboard computer system of the aircraft, and may be accessed as needed. Electronic checklists may include "official" checklists that comply with industry standards, user-configured checklists, or a combination of these. Each electronic checklist includes a list of flight deck instrument settings that are required for operation of the aircraft, and completion of electronic checklists may be a mandatory part of a pre-flight or during-flight inspection.

In certain embodiments, a flight checklist may be associated with one of two types: Normal Flight Checklists or Non-Normal Flight Checklists. Normal Flight Checklists are associated with Phase of Flight (e.g., Preflight, Taxi, Takeoff, Climb, Cruise, Descent, Approach and Landing and Shutdown). Before each phase of flight, the flight crew is required to configure the aircraft for safe flight operations, and uses a predetermined Normal Flight Checklist to assist in this configuration. Non-Normal Flight Checklists are driven by Warning or Advisory Messages (e.g., Engine Indicating and Crew Alerting System (EICAS) messages), which are generated in response to a problem or issue associated with equipment and/or systems onboard the aircraft. Non-Normal Flight Checklists provide instructions to fix the aircraft and/or to take the aircraft safely from the warning scenario.

Next, the process 400 recognizes a plurality of flight deck instruments associated with the action items (step 404). Here, the process 400 accesses a stored database of electronic checklist data, including information detailing one or more flight deck instruments used to complete an electronic checklist action item. The process 400 then presents, via visual overlay device display, required settings for the plurality of flight deck instruments as graphical elements superimposed over each of the plurality of flight deck instruments (step 406).

Using the example described in FIG. 3, a subset of flight deck instruments may be relevant to complete a first checklist (e.g., "Checklist 1"). The process 400 accesses Checklist 1, and recognizes that an autopilot instrument, a flight director instrument, a crew warning system instrument, and a flaps control instrument are used to complete Checklist 1. This subset of flight deck instruments does not include the entirety of the instruments on the panel, or the entirety of the instruments in the flight deck. The subset merely represents the flight deck instruments that are relevant to the completion of Checklist 1. Other flight deck instruments may be relevant to other electronic checklists. The process 400 presents the required settings for each of the subset of flight deck instruments, obtained from Checklist 1, as text and/or symbols in a visual overlay display. The text and/or symbols may be superimposed over each applicable flight deck instrument, or superimposed over the panel in a general vicinity of the applicable flight deck instrument. Text may include a specific instruction for a flight crew member to complete, as part of Checklist 1. Text or symbols may be formatted to call attention to the applicable flight deck instrument.

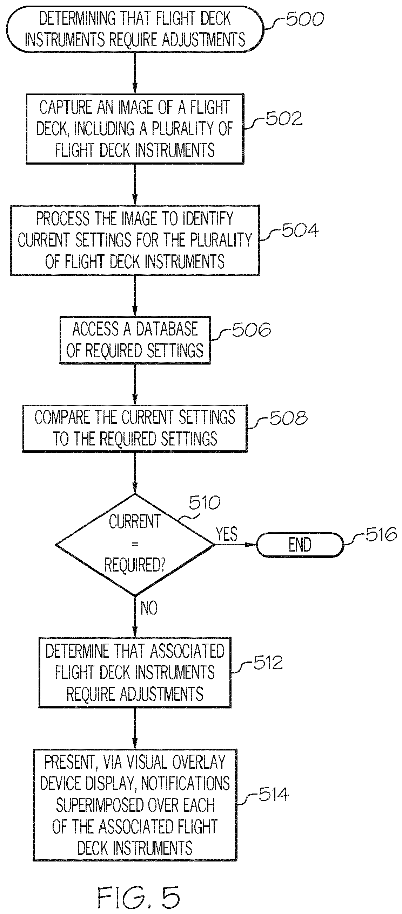

In certain embodiments, the required settings presented by the visual overlay device display include required adjustments to associated flight deck instruments. In this case, a flight deck assistance system first determines that particular flight deck instruments require adjustments, and then presents indications of the required adjustments as graphical elements superimposed over the associated flight deck instruments. FIG. 5 is a flow chart that illustrates an embodiment of this process 500 for determining that flight deck instruments require adjustments.

First, the process 500 captures an image of a flight deck, including a plurality of flight deck instruments (step 502). The process 500 may initiate image capture according to a timed schedule, or in response to a user accessing an electronic checklist onboard the aircraft. Images may be stored in an onboard computer system for further processing and analysis. The process 500 may capture a single image that includes any subset of the flight deck instruments, up to and potentially including the entirety of the flight deck instruments. In other embodiments, the process 500 may capture a plurality of images from multiple cameras. As an example, the process 500 may capture images of various areas or perspectives of the flight deck according to a timed interval schedule, and store the images for further processing when needed. In some embodiments, the process 500 may capture one or more images (using one or more cameras) relevant to an accessed electronic checklist. For example, a user may access a particular checklist that is relevant to a particular instrument panel. The process 500 may then capture a current image of the particular instrument panel, or current images of more than one particular instrument panel, for further analysis.

Next, the process 500 processes the image to identify current settings for the plurality of flight deck instruments (step 504). The current settings may include current switch positions, readout values, and other visual indications of the configuration of a flight deck instrument.

In certain embodiments, the process 500 uses digital image processing techniques, to include image analysis and segmentation techniques. Image analysis is concerned with making quantitative measurements from an image to produce a description of it. In the simplest form, this task could be reading a switch position or a readout value. Segmentation techniques are used to isolate the desired object from the image so that position or readout value can be extracted. This information may be compared with a preloaded database of expected switch positions and readout values.

The process 500 then accesses a database of required settings (step 506) associated with particular flight deck instruments. Required settings (e.g., switch positions, readout values, etc.) for a flight deck instrument may change at different times and/or phases of flight. In other words, a flight deck instrument may require a particular setting during pre-flight, a change to the settings during take-off, and potentially other changes to the settings during other phases of flight. These variances in required settings (e.g., switch positions and readout values) are stored in an onboard database. The process 500 compares the current settings to the required settings (step 508) to identify discrepancies. A discrepancy exists when a required setting and a detected current setting do not match.

When the current settings are the same as the required settings (the "Yes" branch of 510), the process 500 recognizes that there is no discrepancy, and the process 500 ends (step 516). However, when the current settings differ from the required settings (the "No" branch of 510), the process 500 determines that there is a discrepancy between the current settings and the required settings, and the associated flight deck instruments require adjustments (step 512). Here, because the required settings are necessary for safety in operating the aircraft, the process 500 determines that the current settings must be changed to match the required settings.

The process 500 then presents, via a visual overlay device display, notifications superimposed over each of the plurality flight deck instruments, wherein the notifications provide instructions for the adjustments (step 514). These instructions may be presented as text, symbols, or a combination of both text and symbols. Each of the instructions may be placed over, above, or in the general vicinity of the location of the associated flight deck instrument in the flight deck.

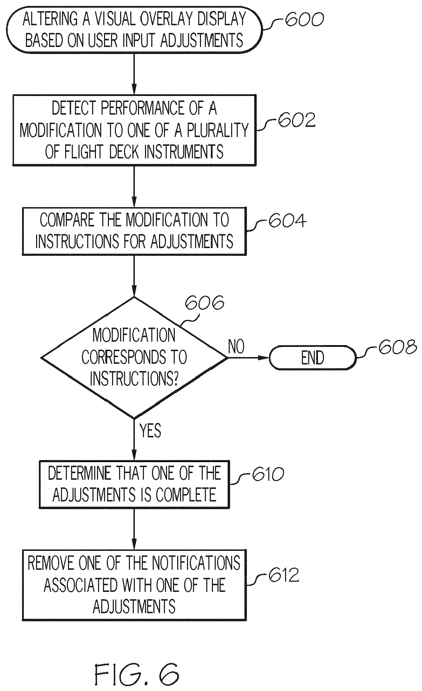

FIG. 6 is a flow chart that illustrates an embodiment of a process 600 for altering an visual overlay display based on a user input configuration. Process 600 may be initiated after a visual overlay display has been presented, as described above with regard to FIGS. 4 and 5. First, the process 600 detects performance of a user configuration of one of a plurality of flight deck instruments (step 602). The user configuration includes initiating and/or changing a setting, such as a switch position or a readout value for the flight deck instrument. The process 600 then compares the user configuration to the required settings for the particular flight deck instrument (step 604). As described above with regard to FIG. 5, the process 600 accesses the required settings at a database onboard the aircraft.

When the detected user configuration does not correspond to the required settings (the "No" branch of 606), the process 600 ends. Here, the process 600 determines that the user has not completed an action item from an electronic checklist in an effort to align the settings of a particular flight deck instrument to the required setting, and the process 600 does not make any changes to the visual overlay display that provides the indications and/or calls attention to the flight deck instruments' required settings. However, when the detected user configuration corresponds to the required settings (the "Yes" branch of 606), then the process 600 removes graphical elements presented by the visual overlay display device that are associated with one of the required settings. Here, the process 600 determines that the user has completed an action item from an electronic checklist that was presented via the visual overlay display, and removes the instruction from the visual overlay display. In certain embodiments, the process 600 requests confirmation from the user that the electronic checklist action item is complete, and removes the associated notification once confirmation has been received.

In some embodiments, the required settings presented by the visual overlay display may include notifications of required adjustments to a flight deck instrument, and the user input configuration may comprise a modification to an existing setting. Here, when the visual overlay display has provided instructions for adjustments as described by FIG. 5, the process 600 compares the modification to instructions for adjustments, and when the modification corresponds to the instructions for adjustments, the process 600 removes one of the notifications presented by the visual overlay display device that is associated with one of the adjustments. Here, the process 600 determines that the user has completed one of the required adjustments that was presented via the visual overlay display, and removes the instruction from the visual overlay display.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

For the sake of brevity, conventional techniques related to signal processing, data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method for providing visual overlay assistance to a flight crew onboard an aircraft, the method comprising:
presenting, via visual overlay device display, required settings for a plurality of flight deck instruments located in a flight deck onboard an aircraft, wherein the required settings are presented as graphical elements superimposed over each of the plurality of flight deck instruments.

2. The method of Claim 1, further comprising:
receiving a user input configuration for one of the plurality of flight deck instruments;
detecting that the user input configuration corresponds to one of the required settings; and
removing the graphical elements corresponding to the one of the required settings from the visual overlay device display.

3. The method of Claim 1, further comprising:
detecting that one or more of the plurality of flight deck instruments require adjustments; and
presenting, via the visual overlay device display, notifications superimposed over each of the one or more of the plurality of flight deck instruments, wherein the notifications provide instructions for the adjustments, and wherein the required settings comprise the notifications.

4. The method of Claim 3, further comprising:
detecting performance of a modification to one of the plurality of flight deck instruments;
comparing the modification to the instructions for the adjustments; and
when the modification corresponds to the instructions for the adjustments,
determining that one of the adjustments is complete; and
removing one of the notifications associated with the one of the adjustments.

5. The method of Claim 3, further comprising:
detecting performance of a modification to one of the plurality of flight deck instruments;
requesting confirmation from the flight crew that one of the adjustments is complete; and
when the confirmation is received,
determining that one of the adjustments is complete; and
removing one of the notifications associated with the one of the adjustments.

6. The method of Claim 3, further comprising:
capturing, by a camera system, an image of the flight deck including the plurality of flight deck instruments;
processing the image to identify current settings for the plurality of flight deck instruments; and
detecting that the plurality of flight deck instruments require adjustments, based on the current settings.

7. The method of Claim 6, further comprising:
accessing a database of required settings;
comparing the current settings to the required settings; and
when the current settings differ from the required settings, determining that associated flight deck instruments require adjustments, the plurality of flight deck instruments comprising the associated flight deck instruments.

8. The method of Claim 6, further comprising:
detecting selection of an electronic checklist comprising a set of action items for the flight crew; and
recognizing that the plurality of flight deck instruments are related to the set of action items;
wherein processing the image occurs to identify the current settings related to the set of action items.

9. A system for providing visual overlay assistance to a flight crew onboard an aircraft, the system comprising:
system memory, configured to store one or more databases comprising required settings associated with a plurality of flight deck instruments;
at least one processor, communicatively coupled to the system memory and a near-to-eye (NTE) display, the at least one processor configured to:
identify the required settings for the plurality of flight deck instruments; and
transmit the required settings to the NTE display; and
the NTE display, configured to present the required settings as graphical elements superimposed over the plurality of flight deck instruments in a visual field.

10. The system of Claim 9, wherein the at least one processor is further configured to:
identify actual settings for the plurality of flight deck instruments;
determine that the plurality of flight deck instruments require adjustments, based on the actual settings; and
transmit the required adjustments to the NTE display, wherein the required settings comprise the required adjustments.

11. The system of Claim 9, further comprising:
a camera system, configured to capture an image of a flight deck of an aircraft;
wherein the at least one processor is further configured to:
process the image of the flight deck;
recognize actual settings for the plurality of flight deck instruments, based on the image processing;
compare the actual settings to the required settings from the database;
identify required adjustments, based on the comparison; and
transmit the required adjustments to the NTE display, wherein the required settings comprise the required adjustments.

12. The system of Claim 11, wherein the one or more databases further comprise at least one electronic checklist including a set of action items associated with preparing the aircraft for flight deck operations;
wherein the at least one processor is further configured to:
detect selection of the electronic checklist; and
recognize relationships between the set of action items and the plurality of flight deck instruments; and
wherein the image is processed to identify the actual settings related to the set of action items.

13. The system of Claim 9, wherein the graphical elements comprise at least one of a symbol and a text representation of the required settings.

14. The system of Claim 9, further comprising:
a user interface communicatively coupled to the at least one processor, configured to receive user input;
wherein the at least one processor is further configured to:
identify user input indicating that a change has been made to one of the plurality of flight deck instruments;
determine whether the change corresponds to one of the required settings for the one of the plurality of flight deck instruments; and
when the change corresponds to one of the required settings, remove a subset of the graphical elements superimposed over the one of the plurality of flight deck instruments.
